# EUROPEAN PATENT SPECIFICATION

(11) **EP 3 751 048 B1**
(45) Date of publication and mention of the grant of the patent: **18.11.2026**
(21) Application number: 19751509.1
(22) Date of filing: 15.01.2019
(51) Int. Cl.: C08L 83/08, C08G 77/388, D06M 15/647, C09D 183/08, C08G 77/26, D06M 15/643

(54) **FIBER-TREATING AGENT**
FASERBEHANDLUNGSMITTEL
AGENT DE TRAITEMENT DE FIBRES

(30) Priority: 07.02.2018 JP 2018019938
(43) Date of publication of application: 16.12.2020
(73) Proprietor: Shin-Etsu Chemical Co., Ltd., Tokyo 100-0004 (JP)
(72) Inventor: HAMAJIMA, Yuta, Annaka-shi, Gunma 379-0224 (JP); FUKAMACHI, Takumi, Annaka-shi, Gunma 379-0224 (JP)
(74) Representative: Mewburn Ellis LLP
(86) International application number: PCT/JP2019/000885
(87) International publication number: WO 2019/155826

(56) References cited:
- JP-A- 2006 213 856
- JP-A- 2013 040 335
- JP-A- 2015 199 886
- JP-A- 2015 199 886
- JP-A- H0 711 000
- JP-A- S59 179 884
- JP-B2- 3 959 579

## Description

### TECHNICAL FIELD

The present invention relates to a fiber treatment which includes a nitrogen-containing polysiloxane that can be synthesized from inexpensive starting materials and has excellent shelf stability, and which imparts an excellent softness and washing resistance to various types of textile fibers and textile products.

### BACKGROUND ART

A variety of organopolysiloxanes, such as dimethylpolysiloxanes, epoxy group-containing polysiloxanes and aminoalkyl group-containing polysiloxanes, are widely used as treatment agents for imparting properties such as softness and smoothness to various types of textile fibers and textile products. Of these, frequent use is made of aminoalkyl group-containing organopolysiloxanes, which have the ability to impart an especially good softness to a variety of textile fibers and textile products. In particular, fiber treatments in which the base compound is an organopolysiloxane having an aminoalkyl group such as -C₃H₆NH₂ or -C₃H₆NHCH₂CH₂NH₂ (Patent Documents 1 to 6 and 12: JP-B S48-1480, JP-B S54-43614, JP-B S57-43673, JP-A S60-185879, JP-A S60-185880, JP-A S64-61576, JP-A 2015-199886) impart excellent softness and are thus widely used.

However, fibers that have been treated using -C₃H₆NH₂- or -C₃H₆NHC₂H₄NH₂-containing organopolysiloxanes have certain major drawbacks, these being amino group deterioration due to heat treatment, drying or exposure to heat or UV light over time, particularly yellowing of the color tone in white to lightly-colored textile fibers and textile products, and a decline in softness.

To prevent such yellowing, methods for reacting an aminoalkyl group-containing organopolysiloxane with an organic acid anhydride or chloride (Patent Document 7: JP-A S57-101046), epoxy compound (Patent Document 8: JP-A S59-179884), higher fatty acid (Patent Document 9: JP-A H01-306683) or carbonate (Patent Document 10: JP-A H02-47371) and thereby modifying the aminoalkyl group have been described.

However, although such modified aminoalkyl group-containing organopolysiloxanes do have an observable improvement in the yellowness-preventing effect as compared with unmodified aminoalkyl group-containing organopolysiloxanes, the effect remains insufficient. Moreover, from the standpoint of imparting softness and smoothness to textile fibers, they are instead inferior to unmodified aminoalkyl group-containing organopolysiloxanes.

JP No. 3959579 (Patent Document 11) describes a method for preparing nitrogen-containing polysiloxanes by subjecting an organopolysiloxane having a hydroxyl group on the end and a nitrogen-containing organosilane to a dealcoholation reaction while removing alcohol that forms as a by-product.

The nitrogen-containing polysiloxane thus obtained has a good softness and low yellowing properties.

Nevertheless, only methoxy group-containing polysiloxanes are mentioned in the examples presented in JP No. 3959579. Methoxy groups have a high reactivity, and so the possibility exists that hydrolytic condensation will proceed over time and the viscosity will increase.

### PRIOR ART DOCUMENTS

### PATENT DOCUMENTS

Patent Document 1: JP-B S48-1480
Patent Document 2: JP-B S54-43614
Patent Document 3: JP-B S57-43673
Patent Document 4: JP-A S60-185879
Patent Document 5: JP-A S60-185880
Patent Document 6: JP-A S64-61576
Patent Document 7: JP-A S57-101046
Patent Document 8: JP-A S59-179884
Patent Document 9: JP-A H01-306683
Patent Document 10: JP-A H02-47371
Patent Document 11: JP No. 3959579
Patent Document 12: JP-A 2015-199886

### SUMMARY OF THE INVENTION

### TECHNICAL PROBLEM

It is therefore an object of the present invention to provide a fiber treatment composition which includes a nitrogen-containing polysiloxane that can be synthesized from inexpensive starting materials and has excellent shelf stability, and which imparts excellent softness and washing resistance to various types of textile fibers and textile products.

### SOLUTION TO THE PROBLEM

The inventors have conducted extensive investigations in order to achieve these objects. As a result, they have discovered that a fiber treatment which includes a subsequently described nitrogen-containing polysiloxane of general formula (1), that is obtained by a dealcoholation reaction between an organopolysiloxane having a hydroxyl group as the polymer end group and a nitrogen-containing organosilane having an ethoxy group, can be synthesized from inexpensive starting materials and has excellent shelf stability, and/or which includes the product of a reaction of this nitrogen-containing polysiloxane with an epoxy compound, imparts textile fibers with a good softness and a highly durable water absorbency. This discovery ultimately led to the present invention.

Accordingly, the present invention provides the fiber treatment as defined in the claims.

### ADVANTAGEOUS EFFECTS OF THE INVENTION

By including, within a fiber treatment, a nitrogen-containing polysiloxane of a specific structure which can be synthesized from inexpensive starting materials and has excellent shelf stability, the fiber treatment is able to impart fibers with a good softness and a highly durable water absorbency.

### DESCRIPTION OF EMBODIMENTS

The invention is described more fully below.

The fiber treatment composition of the invention includes the product of a reaction of a nitrogen-containing polysiloxane of general formula (1) below with an epoxy compound, provided that the reaction product is represented by general formula (5) below. 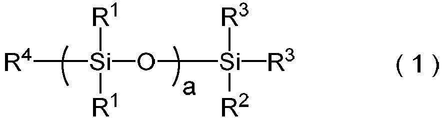 **In** the formula, each R¹ is independently an unsubstituted or halogen-substituted monovalent hydrocarbon group of 1 to 20 carbon atoms, R² is a monovalent organic group having at least one nitrogen atom, each R³ is independently R¹ or an ethoxy group, provided that at least one R³ is an ethoxy group, R⁴ is a hydroxyl group or -OSiR²R³R³, and the subscript "a" is an integer from 2 to 2,000.

**In** formula (1), each R¹ is independently an unsubstituted or halogen-substituted monovalent hydrocarbon group of 1 to 20 carbon atoms, preferably 1 to 6 carbon atoms. Specific examples of R¹ include alkyl groups such as methyl, ethyl, propyl, butyl, pentyl, hexyl, octyl, decyl, dodecyl, tetradecyl, octadecyl and eicosyl groups; cycloalkyl groups such as cyclopentyl and cyclohexyl groups; alkenyl groups such as vinyl, allyl, propenyl, butenyl and hexenyl groups; aryl groups such as phenyl and tolyl groups; aralkyl groups such as benzyl, phenylethyl and phenylpropyl groups; and halogen-substituted hydrocarbon groups in which some or all hydrogen atoms bonded to these carbon atoms are substituted with halogen atoms, including halogenated alkyl groups and halogenated phenyl or other aryl groups such as chloromethyl, trifluoropropyl and chlorophenyl groups. It is especially preferable for at least 90 mol% of these to be methyl, phenyl and trifluoropropyl groups.

In formula (1), R² is a monovalent organic group that includes at least 1, preferably from 1 to 5, and more preferably from 1 to 3, nitrogen atoms. Examples include groups of general formula (2) below

-R⁵(NHCH₂CH₂)_{b}NH₂ (2)

(wherein R⁵ is a divalent hydrocarbon group of 1 to 6 carbon atoms, and the subscript "b" is an integer from 0 to 4).

In formula (2), R⁵ is a divalent hydrocarbon group of 1 to 6 carbon atoms, and preferably 1 to 3 carbon atoms. Specific examples include alkylene groups such as methylene, dimethylene, trimethylene, tetramethylene, pentamethylene and hexamethylene groups. Of these, methylene, dimethylene and trimethylene groups are desirable, with the trimethylene group being especially preferred.

The subscript "b" is an integer from 0 to 4, and preferably an integer from 0 to 2.

Specific examples of R² in formula (1) include the following groups.

-C₃H₆NH₂

-C₃H₆NHC₂H₄NH₂

-C₃H₆NHC₂H₄NHC₂H₄NH₂

In formula (1), each R³ is independently R¹ or an ethoxy group. At least one R³, and preferably from 2 to 4, per molecule is an ethoxy group. R³ is preferably a methyl or ethoxy group.

In formula (1), R⁴ is a hydroxyl group or -OSiR²R³R³. When R⁴ is -OSiR²R³R³, it may be the same as or different from the -OSiR²R³R³ at the other end in formula (1).

**In** formula (1), the subscript "a" is an integer from 2 to 2,000, preferably an integer from 5 to 500, and more preferably an integer from 10 to 300. When "a" is smaller than 2, the softness-imparting effect on textile fibers is poor; when it exceeds 2,000, the viscosity of the polysiloxane itself becomes high, and so the workability decreases.

The nitrogen-containing polysiloxane of formula (1) has a viscosity at 25°C which is preferably from about 100 mPa·s to about 10,000 mPa·s. **In** this disclosure, the viscosity at 25°C after being stored for 3 months at 40°C is preferably not more than twice the viscosity at 25°C prior to storage (initial viscosity). The viscosity herein is a value measured with a rotational viscometer (the same applies below).

Specific examples of the nitrogen-containing polysiloxane of formula (1) are shown below 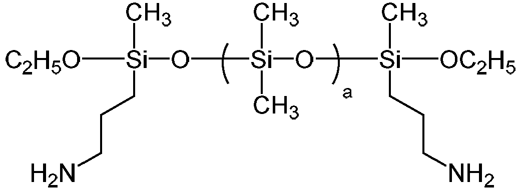 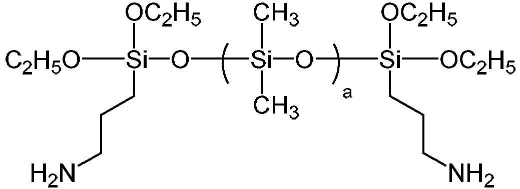 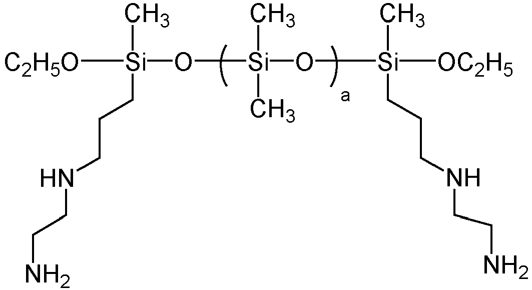 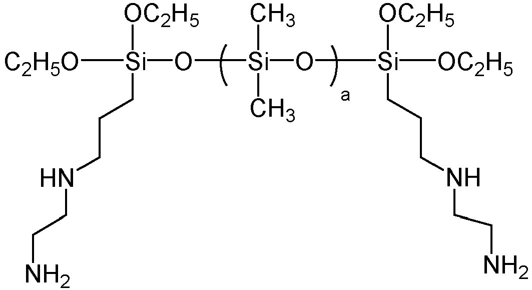 (wherein the subscript "a" is the same as above).

The nitrogen-containing polysiloxane of formula (1) can be obtained by reacting (A) an organopolysiloxane of formula (3) below 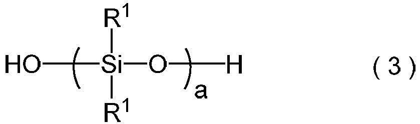
(wherein R¹ and "a" are the same as above) with (B) a nitrogen-containing organosilane of formula (4) below 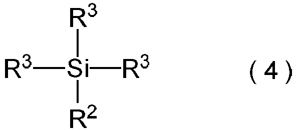
(wherein R² and R³ are the same as above) that has an ethoxy group while removing alcohol that forms as a by-product.

The organopolysiloxane of formula (3) that serves as component (A) is exemplified by compounds of the following formulae 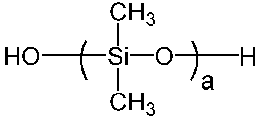 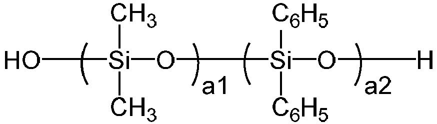 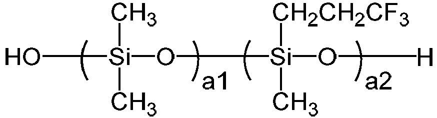 (wherein "a" is the same as above, a1 and a2 are each integers of 1 or more, and the sum a1+a2 is an integer from 2 to 2,000).

The organosilane of formula (4) that serves as component (B) is exemplified by the following compounds. Component (B) may be of one type used alone or two or more may be used together. It is preferable to use an organosilane having two or more ethoxy groups so that ethoxy groups remain following the reaction.

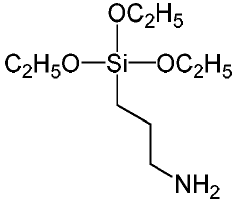

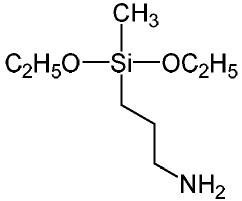

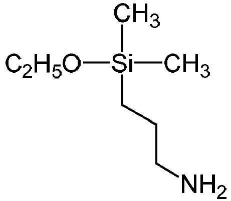

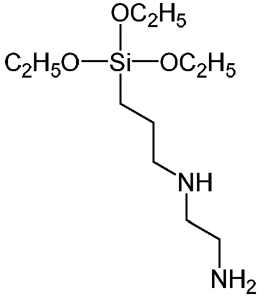

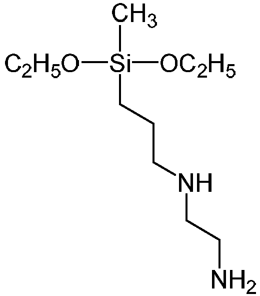

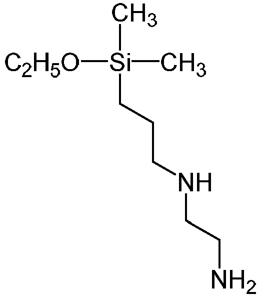

When the molar ratio (A)/(B) between components (A) and (B) in the reaction exceeds 1.0, much polysiloxane that does not contain nitrogen atoms ends up remaining, which is not desirable. On the other hand, when the ratio is less than 0.5, some of the organosilane (B) serving as a starting material remains present. Hence, it is preferable for 0.5 ≤ (A)/(B) ≤ 1.0, and more preferable for 0.5 ≤ (A)/(B) ≤ 0.75.

In a reaction where (A)/(B) = 1.0, a nitrogen-containing polysiloxane in which there is a nitrogen atom-containing group at one end and a silanol group remains at one end is obtained as some of the product. This polysiloxane is relatively rich in reactivity and bonds more strongly with fibers, as a result of which excellent softness and longevity of softness, as well as resistance to washing can be obtained. On the other hand, when storage as a polysiloxane is required, depending on the storage conditions, this sometimes invites a rise in viscosity over time.

The conditions of the reaction between component (A) and component (B) are generally a reaction temperature of between 50°C and 180°C, with the reaction preferably being carried out for a period of from 1 to 20 hours. With this reaction, a nitrogen-containing polysiloxane of formula (1) can be easily obtained. Because the alcohol that forms as a by-product hinders the reaction, it is necessary to carry out the reaction under a stream of nitrogen while removing the alcohol.

In this reaction, a solvent is not particularly necessary, although when component (A) has a high viscosity, the reaction may be carried out using a solvent such as toluene or xylene.

The reaction may be carried out in the absence of a catalyst. However, when the reaction is slow, if necessary, a catalyst such as triethylamine, triethanolamine, diethylhydroxylamine, tetramethylethylenediamine, sodium hydroxide, potassium hydroxide, sodium bicarbonate or sodium carbonate may be used.

The reaction product of the nitrogen-containing polysiloxane of formula (1) with an epoxy compound can be obtained by reacting some or all NH or NH₂ hydrogen atoms on the nitrogen-containing polysiloxane of formula (1) above with the epoxy group on the epoxy compound in the presence of at least one solvent selected from ether solvents, ketone solvents and alcohol solvents.

Here, the epoxy compound is exemplified by compounds of the following formulae 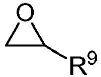 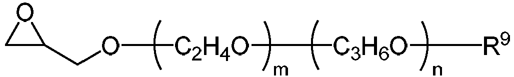 (wherein R⁹ is a hydrogen atom or a monovalent hydrocarbon group such as an alkyl group of 1 to 8 carbon atoms; and m and n are each integers from 0 to 40, preferably from 0 to 10).

In the above formulae, R⁹ is a hydrogen atom or a monovalent hydrocarbon group such as an alkyl group of 1 to 8 carbon atoms. Specific examples of the monovalent hydrocarbon group include alkyl groups such as methyl, ethyl, propyl, butyl, pentyl, hexyl and octyl groups. Preferred examples of R⁹ are methyl, ethyl, propyl and butyl groups.

The reaction ratio of the epoxy compound is such that the amount of epoxy groups in the epoxy compound is preferably from 0.5 to 1 mole, and more preferably from 0.75 to 1 mole, per mole of the nitrogen-bonded hydrogen atoms in the nitrogen-containing polysiloxane of formula (1). When there is too little epoxy compound, the water absorbency-imparting effect on the fibers may be low. Also, when unreacted epoxy compound remains following the reaction, the storage stability may decrease. Hence, the reaction is preferably carried out following addition such as to give the above reaction ratio.

The at least one type of solvent selected from among ether solvents, ketone solvents and alcohol solvents is not particularly limited so long as it is an ether solvent, a ketone solvent or an alcohol solvent. A known solvent should be used. Specific examples include ether solvents such as dibutyl ether, dioxane and tetrahydrofuran; ketone solvents such as acetone and methyl ethyl ketone (MEK); and alcohol solvents such as methanol, ethanol, 2-propanol, n-butanol, sec-butanol, 2-ethyl-1-hexanol, 2-methoxyethanol, 2-ethoxyethanol, 2-butoxyethanol, ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,2-hexanediol, 1,6-hexanediol, 2,5-hexanediol, 2-methyl-2,4-pentanediol, 2,3-dimethyl-2,3-butanediol, 2-ethylhexanediol, 1,2-octanediol, 1,2-decanediol, 2,2,4-trimethylpentanediol, 2-butyl-2-ethyl-1,3-propanediol and 2,2-diethyl-1,3-propanediol. Of these, an alcohol solvent is preferred. An alcohol solvent of 1 to 6 carbon atoms is especially preferred.

The amount of solvent added when reacting the epoxy compound with the nitrogen-containing polysiloxane of formula (1) is preferably from 0.1 to 100 parts by weight, more preferably from 0.5 to 50 parts by weight, and even more preferably from 1 to 30 parts by weight, per 100 parts by weight of the nitrogen-containing polysiloxane of formula (1). At less than 0.1 part by weight, the reaction between the nitrogen-containing polysiloxane of formula (1) and the epoxy compound proceeds with difficulty.

It is preferable for the nitrogen-containing polysiloxane of formula (1) and the epoxy compound to be reacted at between 50°C and 150°C, especially between 70°C and 140°C, for a period of from 1 to 8 hours, especially from 1 to 4 hours.

The reaction product of the nitrogen-containing polysiloxane of formula (1) with an epoxy compound is represented by general formula (5) below. 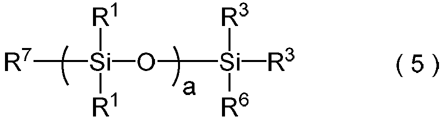 In formula (5), R¹, R³ and the subscript "a" are the same as described above; R⁶ is a group of formula (6) below

-R⁵(NR⁸CH₂CH₂)_{b}NR⁸₂ (6)

[wherein R⁵ is the same as described above, the subscript "b" is an integer from 1 to 4, each R⁸ is independently a hydrogen atom or -CH₂C(OH)H(CH₂O)ₖ(C₂H₄O)ₘ(C₃H₆O)ₙR⁹ (R⁹, m and n being the same as described above, and k being 0 or 1), provided that at least one R⁸ is -CH₂C(OH)H(CH₂O)ₖ(C₂H₄O)ₘ(C₃H₆O)ₙR⁹]; and R⁷ is a hydroxyl group or -OSiR⁶R³R³.

The viscosity at 25°C of the reaction product of the nitrogen-containing polysiloxane of formula (5) with an epoxy compound is preferably from about 100 mPa·s to about 10,000 mPa·s. Also, in this invention, the viscosity at 25°C of the above reaction product when stored at 40°C for 3 months is preferably not more than twice the viscosity at 25°C prior to storage (initial viscosity).

Specific examples of formula (5) include the compounds shown below 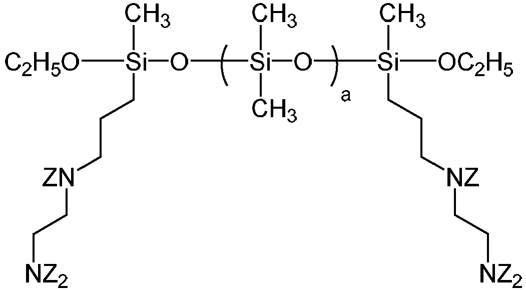 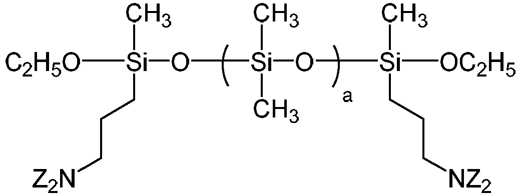
(wherein "a" is the same as described above, Z is an entity of the following formula 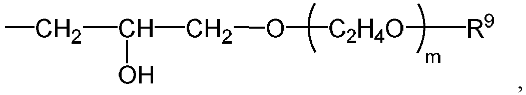
and m and R⁹ are the same as described above).

The fiber treatment of the invention includes one or more nitrogen-containing polysiloxanes of formula (5). To obtain the fiber treatment, the nitrogen-containing polysiloxane of formula (5) may be dissolved in an organic solvent such as toluene, xylene, n-hexane, n-heptane, methyl ethyl ketone, methyl isobutyl ketone, ethyl acetate, butyl acetate or mineral terpene; may be dispersed in water and used; or may be rendered into an emulsion using an emulsifying agent such as a nonionic, anionic, cationic or amphoteric surfactant.

Here, the amount of nitrogen-containing polysiloxane (nitrogen-containing polysiloxane of formula (5) in the fiber treatment is preferably from 0.01 to 30 wt%, more preferably from 0.05 to 10 wt%, and even more preferably from 0.1 to 3 wt%, of the fiber treatment. When the amount of the nitrogen-containing polysiloxane is too low, the softness-imparting effect on fibers may be poor; when the amount is too high, the stability as a fiber treatment may be lost.

The emulsifying agent used when preparing an emulsion is not particularly limited. Examples of nonionic surfactants include ethoxylated higher alcohols, ethoxylated alkyl phenols, polyol fatty acid esters, ethoxylated polyol fatty acid esters, ethoxylated fatty acids, ethoxylated fatty acid amides, sorbitol, sorbitan fatty acid esters, ethoxylated sorbitan fatty acid esters and sucrose fatty acid esters. These have a hydrophilic-lipophilic balance (HLB) that is preferably in the range of 5 to 20, and more preferably in the range of 10 to 16. Examples of anionic surfactants include higher alcohol sulfuric acid ester salts, alkyl phenyl ether sulfuric acid ester salts, alkylbenzene sulfonic acid salts, higher alcohol phosphoric acid ester salts, ethoxylated higher alcohol sulfuric acid ester salts, ethoxylated alkyl phenyl ether sulfuric acid ester salts and ethoxylated higher alcohol phosphoric acid salts. Examples of cationic surfactants include alkyltrimethylammonium chlorides, alkylamine hydrochlorides, cocoamine acetate, alkylamine acetates and alkylbenzenedimethylammonium chlorides. Examples of amphoteric surfactants include N-acylamidopropyl-N,N-dimethylammonium betaines and N-acylamidopropyl-N,N'-dimethyl-N'-β-hydroxypropylammonium betaines.

The amount of emulsifying agent used per 100 parts by weight of the nitrogen-containing polysiloxane is preferably from 5 to 50 parts by weight, and more preferably from 10 to 30 parts by weight. The amount of water used during emulsification may be set such that the concentration of nitrogen-containing polysiloxane, expressed in terms of the pure component, is from 10 to 80 wt%, preferably from 20 to 60 wt%.

The above emulsion can be obtained by a known method. The nitrogen-containing polysiloxane and the emulsifying agent (surfactant) are mixed together, and this mixture is emulsified using an emulsifier such as a homogenizing mixer, homogenizer, colloid mill, line mixer, universal mixer (trade name), Ultra Mixer (trade name), Planetary Mixer (trade name), Combi Mix (trade name) or three-roll mixer.

Additives may be used in the fiber treatment agent of the invention, within ranges that do not detract from the objects of the invention. Exemplary additives include textile finishes such as anti-creasing agents, flame retardants, antistatic agents and heat stabilizers; and also antioxidants, ultraviolet absorbers, pigments, metal flake pigments, rheology control agents, curing accelerators, deodorants and antimicrobial agents. These additives may be used singly or two or more may be used in combination.

When the fiber treatment of the invention is applied to textile fibers, application to the fibers may be carried out by dipping, spraying or roll coating. The pickup differs with the type of fiber and is not particularly limited, although the pickup of the nitrogen-containing polysiloxane is generally set in the range of 0.01 to 10 wt% of the fibers. The fibers may then be dried by hot air blowing, a heating oven or the like. Although the conditions vary with the type of fiber, drying may be carried out at between 100°C and 180°C for a period of from 30 seconds to 5 minutes.

The fiber treatment of the invention is not particularly limited as to the textile fibers and textile products treatable therewith, and is effective on natural fibers such as cotton, silk, linen, wool, angora and mohair, and also on synthetic fibers such as polyester, nylon, acrylics and spandex. Nor are there any limitations on the form and shape of such textile fibers and textile products, the textile treatment of the invention being suitable for use in treating not only raw materials such as staple fiber, filament, tow and yarn, but also various processed forms such as knit fabric, woven fabric, batting and nonwoven fabric.

The fiber treatment of the invention, by including a nitrogen-containing polysiloxane of a specific structure that is prepared from inexpensive starting materials and has an excellent storage stability, can impart to fibers a good softness and a highly durable water absorbency.

### EXAMPLES

The invention is described more fully below by way of Synthesis Examples, Reference Examples, Examples and Comparative Examples.

### Synthesis Example 1

A 500 mL glass flask equipped with an ester adapter, a condenser and a thermometer was charged with 148.0 g (0.20 mol) of the α,ω-dihydroxydimethylsiloxane of average structural formula (7) below as component (A) and 93.6 g (0.40 mol) of N-β-(aminoethyl)-γ-aminopropylmethyldiethoxysilane as component (B), and the reaction was carried out for 4 hours at 120°C under nitrogen bubbling. Ethanol boil-off due to a de-ethanolation reaction was observed in the ester adaptor. Following reaction completion, structural identification by ²⁹Si-NMR and ¹H-NMR was carried out on the product obtained. As a result, the polysiloxane of formula (8) below was found to have been obtained.

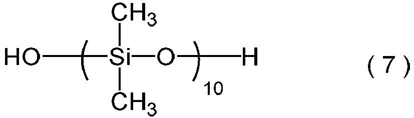

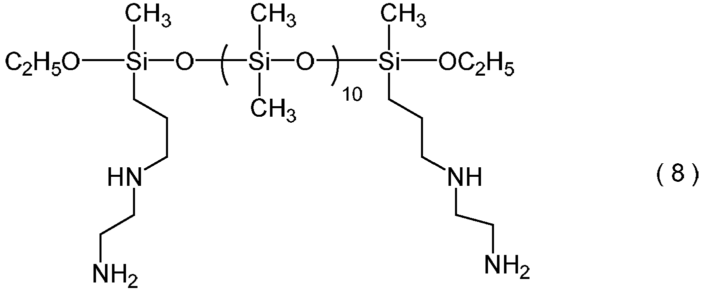

### Synthesis Example 2

A 500 mL glass flask equipped with an ester adapter, a condenser and a thermometer was charged with 296.0 g (0.10 mol) of the α,ω-dihydroxydimethylsiloxane of average structural formula (9) below as component (A) and 46.8 g (0.20 mol) of N-β-(aminoethyl)-γ-aminopropylmethyldiethoxysilane as component (B), and the reaction was carried out for 4 hours at 120°C under nitrogen bubbling. Ethanol boil-off due to a de-ethanolation reaction was observed in the ester adaptor. Following reaction completion, structural identification by ²⁹Si-NMR and ¹H-NMR was carried out on the product obtained. As a result, the polysiloxane of formula (10) below was found to have been obtained.

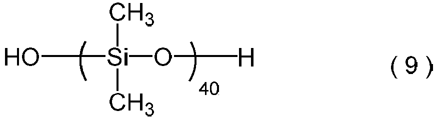

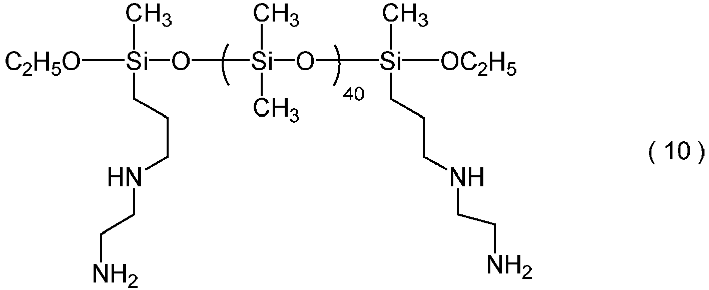

### Synthesis Example 3

A 500 mL glass flask equipped with an ester adapter, a condenser and a thermometer was charged with 325.6 g (0.02 mol) of the α,ω-dihydroxydimethylsiloxane of average structural formula (11) below as component (A) and 9.36 g (0.04 mol) of N-β-(aminoethyl)-γ-aminopropylmethyldiethoxysilane as component (B), and the reaction was carried out for 4 hours at 120°C under nitrogen bubbling. Ethanol boil-off due to a de-ethanolation reaction was observed in the ester adaptor. Following reaction completion, structural identification by ²⁹Si-NMR and ¹H-NMR was carried out on the product obtained. As a result, the polysiloxane of formula (12) below was found to have been obtained.

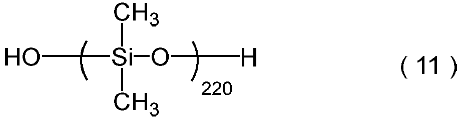

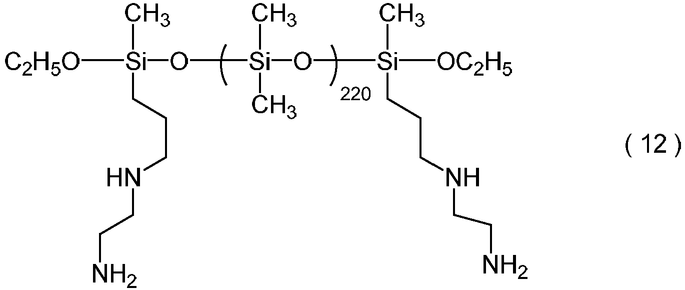

### Synthesis Example 4

A 500 mL glass flask equipped with an ester adapter, a condenser and a thermometer was charged with 296.0 g (0.10 mol) of the α,ω-dihydroxydimethylsiloxane of average structural formula (9) above as component (A) and 38.3 g (0.20 mol) of γ-aminopropylmethyldiethoxysilane as component (B), and the reaction was carried out for 4 hours at 120°C under nitrogen bubbling. Ethanol boil-off due to a de-ethanolation reaction was observed in the ester adaptor. Following reaction completion, structural identification by ²⁹Si-NMR and ¹H-NMR was carried out on the product obtained. As a result, the polysiloxane of formula (13) below was found to have been obtained.

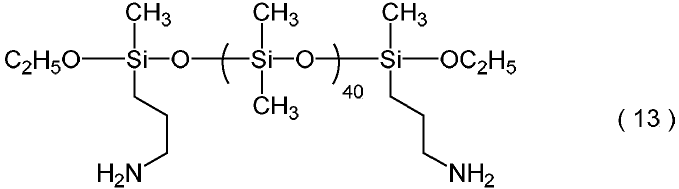

### Synthesis Example 5

A 1,000 mL glass flask equipped with an ester adapter, a condenser and a thermometer was charged with 296.0 g (0.10 mol) of the α,ω-dihydroxydimethylsiloxane of average structural formula (9) above as component (A) and 46.8 g (0.20 mol) of N-β-(aminoethyl)-γ-aminopropylmethyldiethoxysilane as component (B), and the reaction was carried out for 4 hours at 120°C under a stream of nitrogen. Ethanol boil-off due to a deethanolation reaction was observed in the ester adaptor. Following reaction completion, the system was cooled to 80°C, 14 g of isopropyl alcohol and 204.4 g (0.60 mol) of the epoxy compound of average structural formula (14) below were added, and the reaction was carried out for 4 hours at 80°C. Next, 2 hours of stripping was carried out under a reduced pressure of 10 mmHg and 120°C, thereby giving a clear colorless oil. The ¹H-NMR of the resulting oil was measured, whereupon it was confirmed that all of the epoxy groups had reacted. As a result of ²⁹Si-NMR structural analysis, the product was confirmed to be a polysiloxane of average structural formula (15) below. 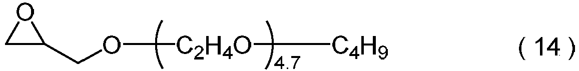 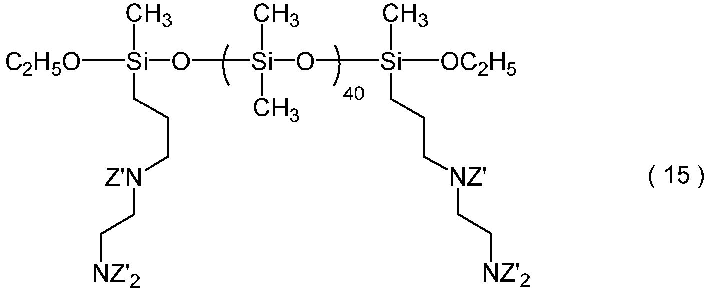 Z' :

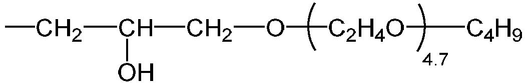

### Synthesis Example 6

A 1,000 mL glass flask equipped with an ester adapter, a condenser and a thermometer was charged with 296.0 g (0.10 mol) of the α,ω-dihydroxydimethylsiloxane of average structural formula (9) above as component (A) and 38.3 g (0.20 mol) of γ-aminopropylmethyldiethoxysilane as component (B), and the reaction was carried out for 4 hours at 120°C under a stream of nitrogen. Ethanol boil-off due to a de-ethanolation reaction was observed in the ester adaptor. Following reaction completion, the system was cooled to 80°C, 14 g of isopropyl alcohol and 136.3 g (0.40 mol) of the epoxy compound of average structural formula (14) below were added, and the reaction was carried out for 4 hours at 80°C. Next, 2 hours of stripping was carried out under a reduced pressure of 10 mmHg and 120°C, thereby giving a clear colorless oil. The ¹H-NMR of the resulting oil was measured, whereupon it was confirmed that all of the epoxy groups had reacted. As a result of ²⁹Si-NMR structural analysis, the product was confirmed to be a polysiloxane of average structural formula (16) below. 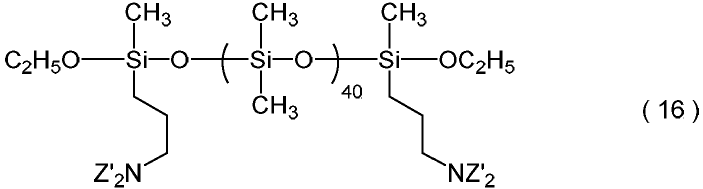 Z' :

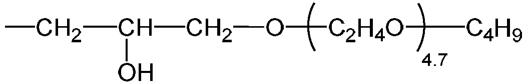

### Reference Example 1

A 500 mL glass flask equipped with an ester adapter, a condenser and a thermometer was charged with 148.0 g (0.20 mol) of the α,ω-dihydroxydimethylsiloxane of average structural formula (7) above as component (A) and 82.6 g (0.40 mol) of N-β-(aminoethyl)-γ-aminopropylmethyldimethoxysilane as component (B), and the reaction was carried out for 4 hours at 120°C under nitrogen bubbling. Methanol boil-off due to a de-methanolation reaction was observed in the ester adaptor. Following reaction completion, structural identification by ²⁹Si-NMR and ¹H-NMR was carried out on the product obtained. As a result, the polysiloxane of formula (17) below was found to have been obtained.

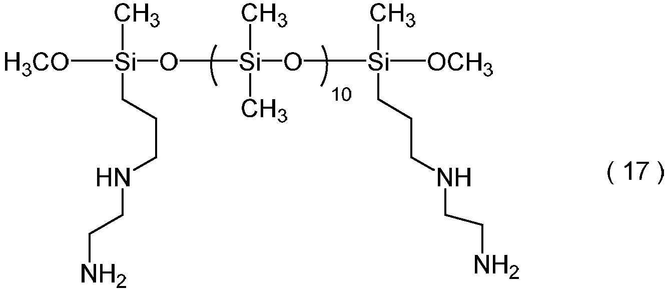

### Reference Example 2

A 500 mL glass flask equipped with an ester adapter, a condenser and a thermometer was charged with 296.0 g (0.10 mol) of the α,ω-dihydroxydimethylsiloxane of average structural formula (9) above as component (A) and 41.3 g (0.20 mol) of N-β-(aminoethyl)-γ-aminopropylmethyldimethoxysilane as component (B), and the reaction was carried out for 4 hours at 120°C under nitrogen bubbling. Methanol boil-off due to a de-methanolation reaction was observed in the ester adaptor. Following reaction completion, structural identification by ²⁹Si-NMR and ¹H-NMR was carried out on the product obtained. As a result, the polysiloxane of formula (18) below was found to have been obtained.

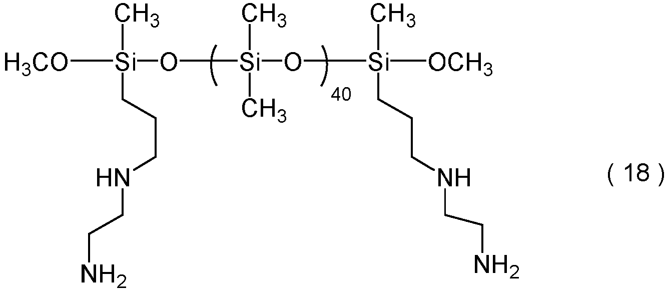

### Reference Example 3

A 1,000 mL glass flask equipped with an ester adapter, a condenser and a thermometer was charged with 296.0 g (0.10 mol) of the α,ω-dihydroxydimethylsiloxane of average structural formula (9) above as component (A) and 41.3 g (0.20 mol) of N-β-(aminoethyl)-γ-aminopropylmethyldimethoxysilane as component (B), and the reaction was carried out for 4 hours at 120°C under nitrogen bubbling. Methanol boil-off due to a de-methanolation reaction was observed in the ester adaptor. Following reaction completion, the system was cooled to 80°C, 14 g of isopropyl alcohol and 204.4 g (0.60 mol) of the epoxy compound of average structural formula (14) below were added, and the reaction was carried out for 4 hours at 80°C. Next, 2 hours of stripping was carried out under a reduced pressure of 10 mmHg and 120°C, thereby giving a clear colorless oil. The ¹H-NMR of the resulting oil was measured, whereupon it was confirmed that all of the epoxy groups had reacted. As a result of ²⁹Si-NMR structural analysis, the product was confirmed to be a polysiloxane of average structural formula (19) below. 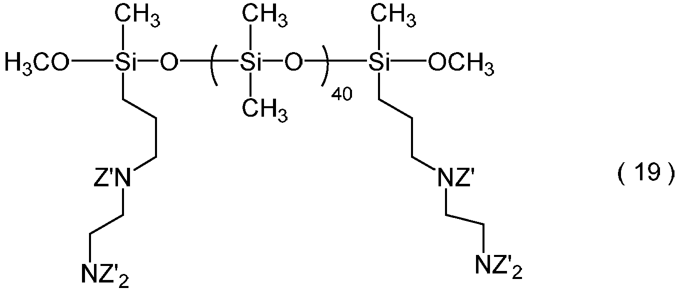 Z':

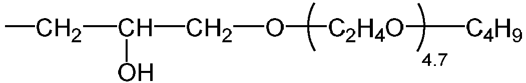

The volatiles contents and viscosities of the nitrogen-containing polysiloxanes obtained in the Synthesis Examples and Reference Examples are shown in Tables 1 and 2. The viscosities are values measured at 25°C with a Brookfield (BM-type) viscometer (Tokyo Keiki, Inc.).

**Table 1**

| | Synthesis Example | | | | | |
|---|---|---|---|---|---|---|
| | 1 | 2 | 3 | 4 | 5 | 6 |
| Formula | (8) | (10) | (12) | (13) | (15) | (16) |
| Volatiles content (wt%, 105°C/3 hrs) | 0.5 | 0.4 | 0.4 | 0.8 | 0.4 | 0.3 |
| Viscosity (mPa·s) | 250 | 400 | 2,010 | 380 | 540 | 490 |

**Table 2**

| | Reference Example | | |
|---|---|---|---|
| | 1 | 2 | 3 |
| Formula | (17) | (18) | (19) |
| Volatiles content (wt%, 105°C/3 hrs) | 0.5 | 0.7 | 0.4 |
| Viscosity (mPa·s) | 220 | 570 | 630 |

The volatiles contents and viscosities of the nitrogen-containing polysiloxanes obtained in the Synthesis Examples and Reference Examples when stored for three months at 40°C are shown in Tables 3 and 4.

**Table 3**

| | Synthesis Example | | | | | |
|---|---|---|---|---|---|---|
| | 1 | 2 | 3 | 4 | 5 | 6 |
| Formula | (8) | (10) | (12) | (13) | (15) | (16) |
| Volatiles content (wt%, 105°C/3 hrs) | 0.3 | 0.2 | 0.5 | 0.3 | 0.2 | 0.9 |
| Viscosity (mPa·s) | 340 | 570 | 2,230 | 450 | 670 | 560 |

**Table 4**

| | Reference Example | | |
|---|---|---|---|
| | 1 | 2 | 3 |
| Formula | (17) | (18) | (19) |
| Volatiles content (wt%, 105°C/3 hrs) | 0.4 | 0.9 | 0.4 |
| Viscosity (mPa·s) | 650 | 1,320 | 1,400 |

The nitrogen-containing polysiloxanes obtained in Synthesis Examples 1 to 6 underwent little increase in viscosity even when stored at 40°C for 3 months, and thus had excellent shelf stabilities. On the other hand, the nitrogen-containing polysiloxanes obtained in Reference Examples 1 to 3 underwent large increases in viscosity when stored at 40°C for 3 months, and so their shelf stabilities were much inferior to those of the nitrogen-containing polysiloxanes obtained in Synthesis Examples 1 to 6.

### Example 1

An aqueous dispersion of a nitrogen-containing polysiloxane was prepared by adding 2 g of the nitrogen-containing polysiloxane of formula (15) obtained in Synthesis Example 5 to 198 g of water and stirring.

### Comparative Example 2

An aqueous dispersion of a nitrogen-containing polysiloxane was prepared by adding 2 g of the nitrogen-containing polysiloxane of formula (16) obtained in Synthesis Example 6 to 198 g of water and stirring.

### Comparative Example 1

An aqueous dispersion of a nitrogen-containing polysiloxane was prepared by adding 2 g of the nitrogen-containing polysiloxane of formula (19) obtained in Reference Example 3 to 198 g of water and stirring.

### Evaluation Tests

The evaluation tests shown below were carried out on the aqueous dispersions of nitrogen-containing polysiloxanes prepared in Example 1 and Comparative Examples 1 and 2.

### Softness:

A polyester/cotton broadcloth (65%/35%, from Tanigashira Shoten) was dipped for 1 minute in the above aqueous dispersions of nitrogen-containing polysiloxanes, after which the cloth was squeezed using rolls at a degree of expression of 100%, dried for 2 minutes at 150°C, and then additionally heat-treated for 2 minutes at 150°C, thereby producing a treated cloth for softness evaluation. A panel of three judges tested the treated cloth by touching it with their hands and rated the softness according to the following criteria.

### Evaluation Criteria

A: Very pleasant to the touch
B: Pleasant to the touch
C: Unpleasant to the touch

### Water Absorbency:

A polyester/cotton broadcloth (65%/35%, from Tanigashira Shoten) was dipped for 10 seconds in the above aqueous dispersions of nitrogen-containing polysiloxanes, after which the cloth was squeezed using rolls at a degree of expression of 100% and dried for 2 minutes at 150°C. A single drop (25 µL) of tap water was deposited onto the treated cloth with a dropping pipette, and the time in seconds until the drop is completely absorbed by the cloth was measured. This treated cloth was washed once with a washing machine by a procedure in accordance with JIS L0217 103, and the water absorbency test was again performed.

### Durability to Washing:

A polyester/cotton broadcloth (65%/35%, from Tanigashira Shoten) was dipped for 10 seconds in the above aqueous dispersions of nitrogen-containing polysiloxanes, after which the cloth was squeezed using rolls at a degree of expression of 100% and dried for 2 minutes at 150°C. The treated cloth was then washed once with a washing machine by a procedure in accordance with JIS L0217 103. The amount of silicone remaining on the fiber surfaces after a single wash was measured with a fluorescence x-ray spectrometer (Rigaku Corporation). The residual ratio (%) compared with when washing is not carried out was calculated.

**Table 5**

| | Example | Comparative Example | |
|---|---|---|---|
| | 1 | 2 | 1 |
| Softness | A | A | A |
| Water absorbency before washing (seconds) | 4 | 6 | 4 |
| Water absorbency after washing (seconds) | 8 | 11 | 45 |
| Durability to washing (%) | 87 | 60 | 5 |

In Example 1 and Comparative Example 2, the water absorbency both before and after washing was excellent, and much polysiloxane remained on the fibers even after washing. On the other hand, in Comparative Example 1, the water absorbency after washing decreased greatly and substantially no polysiloxane remained on the fibers. From these results, differences in the alkoxy groups at the ends of the polysiloxane appear to affect the durability to washing. It is thought that the polysiloxane having methoxy groups at the ends which was used in Comparative Example 1 had a high hydrophilicity compared with the polysiloxanes having ethoxy groups at the ends which were used in Example 1 and Comparative Example 2, and thus ended up being easily removed by washing treatment.

## Claims

1. A fiber treatment comprising a nitrogen-containing polysiloxane of general formula (5) below 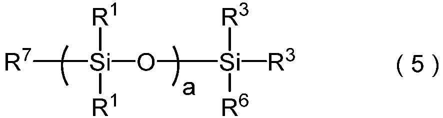
wherein each R¹ is independently an unsubstituted or halogen-substituted monovalent hydrocarbon group of 1 to 20 carbon atoms; each R³ is independently R¹ or an ethoxy group, provided that at least one R³ is an ethoxy group; the subscript "a" is an integer from 2 to 2,000;
R⁶ is a group of formula (6) below
-R⁵(NR⁸CH₂CH₂)_{b}NR⁸₂ (6)
wherein R⁵ is a divalent hydrocarbon group of 1 to 6 carbon atoms, the subscript "b" is an integer from 1 to 4, each R⁸ is independently hydrogen atom or -CH₂C(OH)H(CH₂O)ₖ(C₂H₄O)ₘ(C₃H₆O)ₙR⁹ with R⁹ being a hydrogen atom or a monovalent hydrocarbon of 1 to 8 carbon atoms, the subscripts "m" and "n" being each an integer from 0 to 40, and the subscript "k" being 0 or **1,** provided that at least one R⁸ is -CH₂C(OH)H(CH₂O)ₖ(C₂H₄O)ₘ(C₃H₆O)ₙR⁹; and
R⁷ is a hydroxyl group or -OSiR⁶R³R³.

2. A fiber treatment of claim **1,** wherein the nitrogen-containing polysiloxane has the general formula (5-1) below 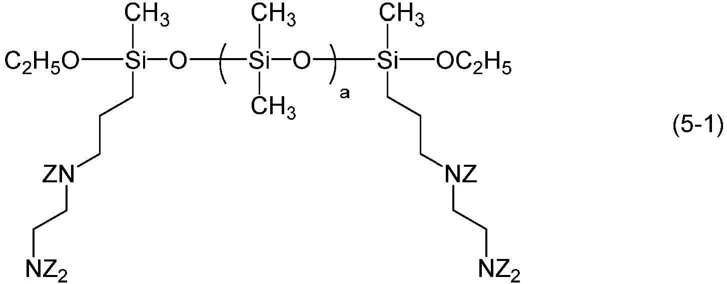
wherein "a" is the same as described above, Z is an entity of the following formula 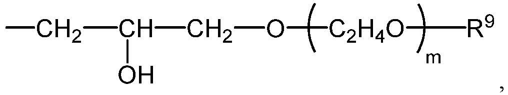
and m and R⁹ are the same as described above.

3. A fiber treatment of claim 2, wherein the nitrogen-containing polysiloxane has the formula (15) below 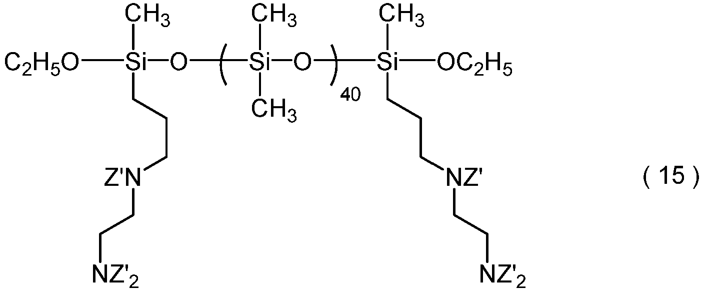 Z' : wherein

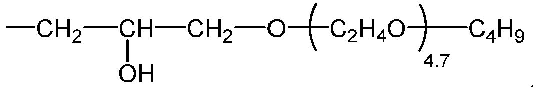

4. A fiber treatment of any of claims 1 to 3, wherein the amount of the nitrogen-containing polysiloxane in the fiber treatment is from 0.1 to 3 wt% of the fiber treatment.

## Patentansprüche

1. Faserbehandlung, die ein Stickstoff-hältiges Polysiloxan der nachfolgenden allgemeinen Formel (5) umfasst: 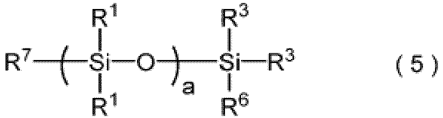
worin die R¹ jeweils unabhängig eine unsubstituierte oder Halogen-substituierte einwertige Kohlenwasserstoffgruppe mit 1 bis 20 Kohlenstoffatomen sind; die R³ jeweils unabhängig R¹ oder eine Ethoxygruppe sind, mit der Maßgabe, dass zumindest ein R³ eine Ethoxygruppe ist; der tiefgestellte Index "a" eine ganze Zahl von 2 bis 2.000 ist; R⁶ eine Gruppe der nachfolgenden Formel (6) ist:
-R⁵(NR⁸CH₂CH₂)_{b}NR⁸₂ (6)
worin R⁵ eine einwertige Kohlenwasserstoffgruppe mit 1 bis 6 Kohlenstoffatomen ist, der tiefgestellte Index "b" eine ganze Zahl von 1 bis 4 ist, die R⁸ jeweils unabhängig ein Wasserstoffatom oder -CH₂C(OH)H(CH₂O)ₖ(C₂H₄O)ₘ(C₃H₆O)ₙR⁹ sind, worin R⁹ ein Wasserstoffatom oder eine einwertige Kohlenwasserstoffgruppe mit 1 bis 8 Kohlenstoffatomen ist, die tiefgestellten Indices "m" und "n" jeweils eine ganze Zahl von 0 bis 40 sind und der tiefgestellte Index "k" = 0 oder 1 ist, mit der Maßgabe, dass zumindest ein R⁸ -CH₂C(OH)H(CH₂O)ₖ-(C₂H₄O)ₘ(C₃H₆O)ₙR⁹ ist;
und R⁷ eine Hydroxylgruppe oder -OSiR⁶R³R³ ist.

2. Faserbehandlung nach Anspruch 1, wobei das Stickstoff-hältige Polysiloxan die nachfolgende allgemeine Formel (5-1) aufweist: 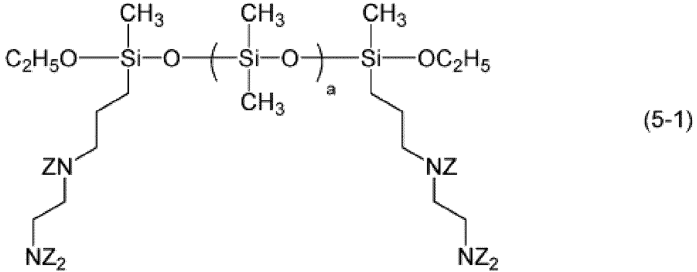
worin "a" wie oben beschrieben ist, Z eine Einheit der folgenden Formel ist: 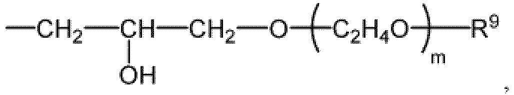
und m und R⁹ wie oben beschrieben sind.

3. Faserbehandlung nach Anspruch 2, wobei das Stickstoff-hältige Polysiloxan die nachfolgende Formel (15) aufweist: 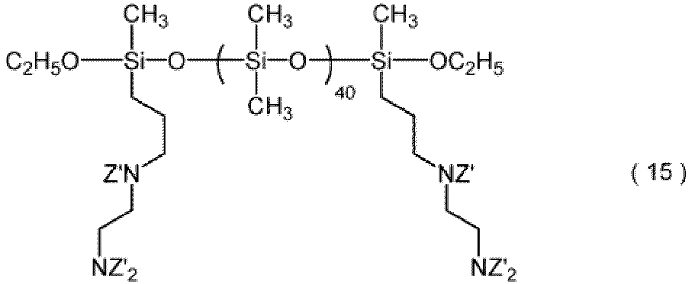 worin Z' Folgendes ist:

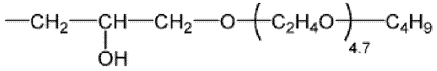

4. Faserbehandlung nach einem der Ansprüche 1 bis 3, wobei die Menge des Stickstoffhältigen Polysiloxans in der Faserbehandlung 0,1 bis 3 Gew.-% der Faserbehandlung ausmacht.

## Revendications

1. Traitement de fibres comprenant un polysiloxane contenant de l'azote de la formule générale (5) ci-dessous 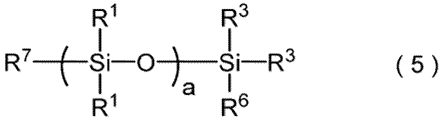
dans lequel chaque R¹ est indépendamment un groupe hydrocarboné monovalent non substitué ou substitué par un halogène de 1 à 20 atomes de carbone ; chaque R³ est indépendamment R¹ ou un groupe éthoxy, à condition qu'au moins un R³ soit un groupe éthoxy ; l'indice « a » est un entier de 2 à 2 000 ; R⁶ est un groupe de la formule (6) ci-dessous
-R⁵(NR⁸CH₂CH₂)_{b}NR⁸₂ (6)
dans lequel R⁵ est un groupe hydrocarboné divalent de 1 à 6 atomes de carbone, l'indice « b » est un nombre entier de 1 à 4, chaque R⁸ est indépendamment un atome d'hydrogène ou -CH₂C(OH)H(CH₂O)ₖ(C₂H₄O)ₘ(C₃H₆O)ₙR⁹ avec R⁹ étant un atome d'hydrogène ou un hydrocarbure monovalent de 1 à 8 atomes de carbone, les indices « m » et « n » étant chacun un nombre entier de 0 à 40, et l'indice « k » étant 0 ou 1, à condition qu'au moins un R⁸ soit -CH₂C(OH)H(CH₂O)ₖ(C₂H₄O)ₘ(C₃H₆O)ₙR⁹ ; et
R⁷ est un groupe hydroxyle ou -OSiR⁶R³R³.

2. Traitement de fibres selon la revendication 1, dans lequel le polysiloxane contenant de l'azote présente la formule générale (5-1) ci-dessous 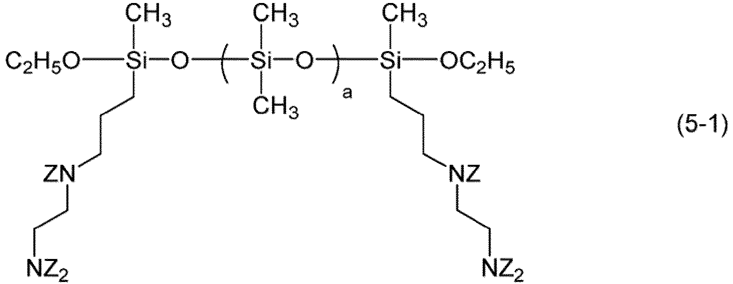
dans lequel « a » est identique à celui décrit ci-dessus, Z est une entité de la formule suivante 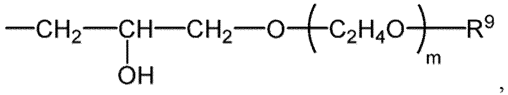
et m et R⁹ sont identiques à ceux décrits ci-dessus.

3. Traitement de fibres selon la revendication 2, dans lequel le polysiloxane contenant de l'azote présente la formule (15) ci-dessous 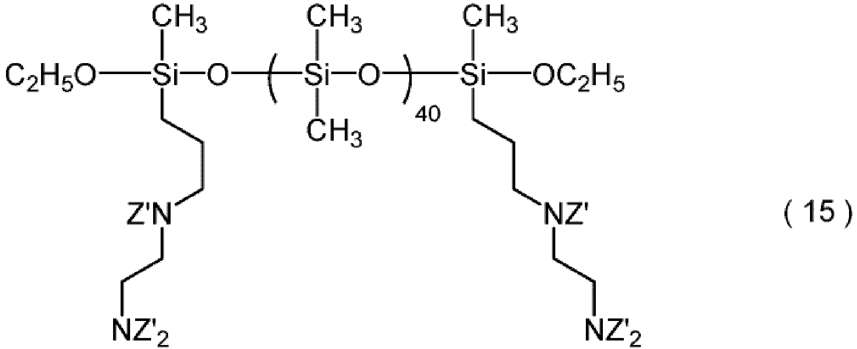 **Z' :** dans lequel

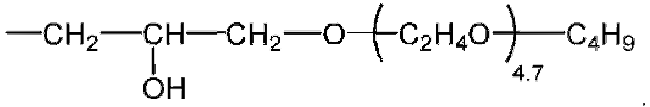

4. Traitement de fibres selon l'une quelconque des revendications 1 à 3, dans lequel la quantité de polysiloxane contenant de l'azote dans le traitement de fibres est de 0,1 à 3 % en poids du traitement de fibres.
